# EUROPEAN PATENT SPECIFICATION

(11) **EP 2 905 210 B1**
(45) Date of publication and mention of the grant of the patent: **18.05.2016**
(21) Application number: 15152839.5
(22) Date of filing: 28.01.2015
(51) Int. Cl.: B62K 19/46, B62K 11/10, F02D 9/10, F02M 35/16, F02M 35/10

(54) **Arrangement of a throttle cable in straddle type vehicle**
Anordnung eines Drosselkabels in einem Grätschsitzfahrzeug
Arrangement d'un câble d'étranglement dans un véhicule de type califourchon

(30) Priority: 07.02.2014 JP 2014022747
(43) Date of publication of application: 12.08.2015
(73) Proprietor: HONDA MOTOR CO., LTD., Tokyo, 107-8556 (JP)
(72) Inventor: Atsuchi, Michio, Saitama, 351-0193 (JP); Nakauchi, Kota, Saitama, 351-0193 (JP); Yamanaka, Takasumi, Saitama, 351-0193 (JP); Oshita, Akira, Saitama, 351-0193 (JP)
(74) Representative: Beder, Jens

(56) References cited:
- EP-A1- 1 384 873
- EP-A1- 2 147 851
- EP-A2- 2 148 083
- EP-A2- 2 372 130

## Description

### TECHNICAL FIELD

The present invention relates a straddle type vehicle with a wiring structure of a throttle cable and, in particular, to the straddle type vehicle which is equipped with a unit swing engine on a vehicle body frame thereof.

### BACKGROUND ART

With respect to the wiring structure of the throttle cable in a conventional straddle type vehicle, there is well known the straddle type vehicle in which the throttle cable for opening and closing a throttle valve is connected to a rotational grip of a steering handle and arranged between the throttle valve and the grip. With respect to the throttle cable, there are disclosed two throttle cables composed of the throttle cable on the pull side and the throttle cable on the return side each of which is connected to the grip, for example in JP 2010-221988 A. Particularly, this document discloses a straddle type vehicle with a wiring structure of a throttle cable, in which all features of the preamble of claim 1 are disclosed.

### DISCLOSURE OF THE INVENTION

### PROBLEM TO BE SOLVED BY THE INVENTION

In such vehicle having the throttle cable on the pull side (hereinafter, referred also to as "throttle cable on the opening side") and the throttle cable on the return side (hereinafter, referred also to as "throttle cable on the closing side) which becomes the pull side when the grip is returned, the number of throttle cables is increased and so ways and means for wiring are required to be figured out. In particular, since, in the straddle type vehicle provided with a swingable unit swing engine for example, a container box is provided above the engine, a predetermined space has to be provided for preventing these throttle cables from interfering with the engine at the time of swinging motion thereof. Like this, the throttle cables exert an influence upon the volume of the container box. Therefore, it is required that the wiring structure of the throttle cables which hardly exerts the influence upon the volume of the container box is provided even in the vehicle which has two throttle cables on the pull side and on the return side.

It is an object of the present invention to provide a straddle type vehicle with which the space occupied by the throttle cables can be decreased, so that the volume of the container box can be increased.

### MEANS FOR SOLVING THE PROBLEM

This object is achieved by a straddle type vehicle according to the enclosed independent claim 1. Advantageous features of the present invention are defined in the corresponding subclaims.

### EFFECTS OF THE INVENTION

According to the first feature of the present invention, since the first throttle cable and the second throttle cable, which located above the intake passage and below the container box, are arranged substantially horizontally side by side in the forward and backward direction of the vehicle, a space occupied by these throttle cables in the upward and downward direction of the vehicle body can be restrained. As a result, abottomof the container box is allowed to approach the intake passage side in proportion to decrease of the space occupied by these throttle cables, so that the volume of the container box can be increased.

According to the second feature of the present invention, the first throttle cable and the second throttle cable, which are connected to the throttle drum while passing through an upper surface of the intake passage, are fitted to the throttle drum in an upwardly and downwardly spaced apart condition in a side view. The first throttle cable connected to the upper side of the throttle drum is arranged forwardly with respect to the second throttle cable connected to the lower side of the throttle drum. Therefore, the first throttle cable and the second throttle cable which are connected to the throttle drum arranged in either of left and right sides of the throttle body can be arranged on or close to the upper surface of the intake passage without crossing, whereby to improve the arrangeability.

According to the preferred embodiment defined in claim 2, since the first throttle cable and the second throttle cable are arranged and located below the extension of the straight line connecting the uppermost portion of the throttle body and the uppermost end of the injector, these throttle cables do not occupy an arrangement space for the container box which is located above the engine, so that the influence upon the volume of the container box can be decreased.

] According to the preferred embodiment defined in claim 3, since the first throttle cable and the second throttle cable are kept in a condition where these throttle cables are arranged substantially horizontally side by side in the forward and backward direction of the vehicle, by the drum side holder on the side where the throttle drum is provided and by the counter drum side holder provided on the opposite side of the throttle drum, the space occupied by these throttle cables in the upward and downward direction of the vehicle body is able to be restrained, so that the influence upon the volume of the container box can be decreased all the more.

### BRIEF DESCRIPTION OF THE DRAWINGS

FIG. 1 is a left side view of a straddle type vehicle equipped with a wiring structure of a throttle cable in accordance with the present invention;
FIG. 2 is a left side view of an essential part of the wiring structure of the throttle cable in the straddle type vehicle as shown in FIG. 1;
FIG. 3 is a right side view of the essential part of the wiring structure of the throttle cable in the straddle type vehicle as shown in FIG. 1;
FIG. 4 is an enlarged right side view of an area around a throttle body and an intake passage of the wiring structure of the throttle cable in the straddle type vehicle as shown in FIG. 1; and
FIG. 5 is a top plan view of the area around the throttle body and the intake passage of the wiring structure of the throttle cable in the straddle type vehicle as shown in FIG. 1.

### BEST MODE FOR CARRYING OUT THE INVENTION

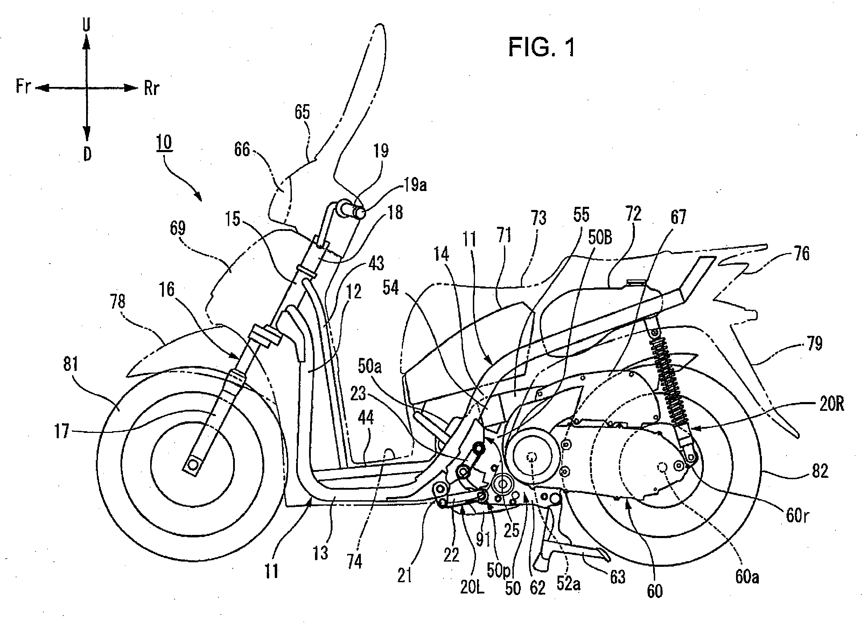

A scooter type vehicle as a straddle type vehicle in accordance with an embodiment of the present invention will be described hereunder with reference to accompanying drawings of FIGS.1 to 5. Herein the drawings shall be viewed in the direction of reference characters, and in the following description, the orientation such as front, rear, left, right, upper, and lower shall be determined based on the direction viewed from an operator. In addition, in the drawings, a front of the vehicle is designated by a reference character Fr, a rear is designated by Rr, a left side is designated by L, a right side is designated by R, an upper side is designated by U, and a lower side is designated by D.

Referring first to FIG. 1, the scooter type vehicle 10 includes a vehicle body frame 11 forming a skeletal structure, a front wheel suspension and steering system 16 provided in a front part of the vehicle body frame 11 in order to suspend and steer a front wheel 81, a unit swing engine 50 provided in substantially a center part of the vehicle body frame 11 in suspended fashion in order to suspend and drive a rear wheel 82, a container box 71 and a fuel tank 72 mounted on a rear part of the vehicle body frame 11 and located above the unit swing engine 50.

The vehicle body frame 11 includes a head pipe 15 provided at an forward end thereof, a pair of left and right down frames 12 extending downwardly from the head pipe 15, a pair of lower frames 13 extending rearwardly from lower ends of the down frames 12, and a pair of rear frames 14 extending upwardly rearwardly from rear ends of the lower frames 13. Moreover, sub-frames 43 and step floor frames 44 functioning as a reinforcement frame are provided along the down frames 12 and lower frames 13. In addition, between the left and right frames of each pair there are provided properly a plurality of cross members (not shown in the drawing) which provide a connection between these frames.

The unit swing engine 50 includes a cylinder section 50a which extends substantially horizontally in the forward and backward direction of the vehicle body, and a rear wheel drive transmission section 60 which is provided with a non-stage transmission, etc. integrally formed in a rear part of an engine main body 50B. An output shaft 60a functioning as an axle shaft of the rear wheel 82 is provided at a rear end of the rear wheel drive transmission section 60 such that the driving force of a crank shaft 52a within a crank case 62 is transmitted properly to the output shaft 60a.

The front wheel suspension and steering system 16 includes a front fork 17 fitted in the headpipe 15 in a steerable fashion, and a bar handle 19 mounted on an upper end of a steering shaft 18 of the front fork 17 and provided with left and right handle grips 19a (only the left one is shown in the drawing).

In addition, an intake system 67 is mounted on an upper part of the rear wheel drive transmission section 60 provided in the rear part of the unit swing engine 50. An exhaust system (not shown) provided with an exhaust pipe 91 is mounted on a lower part of the unit swing engine 50. Further, a main stand 63 is attached to a lower part of the crank case 62.

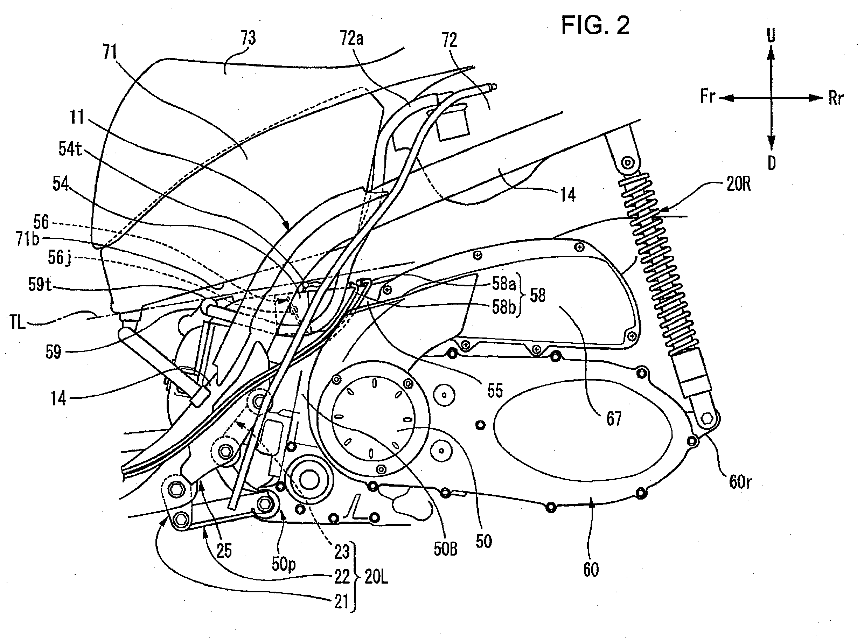

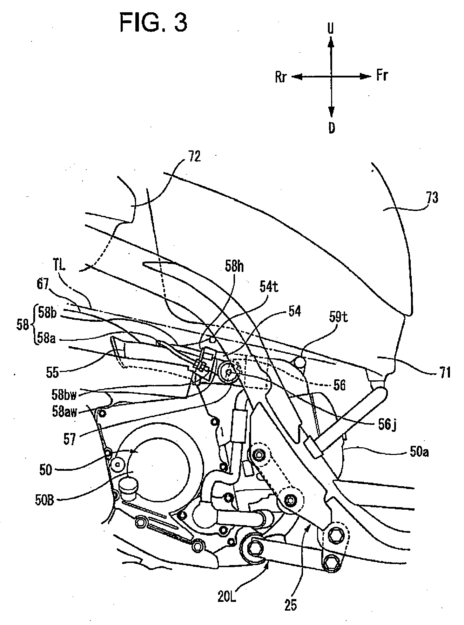

A suspension structure for mounting the unit swing engine 50 on the vehicle body frame 11 includes a link mechanism 20L which holds a lower side of a front part of the engine 50, and a rear cushion unit 20R which holds the rear wheel drive transmission section 60 of the rear part of the engine 50. The link mechanism 20L, as shown in FIGS. 2 and 3, is supported on a front bracket 25 and has a first link member 21, a second link member 22 and a third link member 23. The link mechanism 20L is connected to a pivot portion 50p of the lower side of the front part of the engine 50 so as to carry the unit swing engine 50 in a swingable (rockable) fashion.

By the way, the vehicle body is covered properly with cover members such as a handle cover 65, a front cover 69, a step floor 74, a front fender 78 and a rear fender 79, etc. and with a seat 73. In addition, on a front part and a rear part of the vehicle there are provided a head lamp 66 and a tail lamp 76.

Further, the unit swing engine 50, as shown in FIG. 2, is provided with an intake passage 55 which extends from the cylinder section 50a to the rear of the vehicle body along the engine main body 50B. Namely, the intake passage 55 extends from the throttle body 54 toward the rear between the container box 71 and the engine main body 50B and is connected to the intake system 67. In the throttle body 54, a support shaft 56j passes through the inside of the intake passage 55, and a flap type throttle valve 56 is provided on the support shaft 56j so as to open and close the intake passage 55.

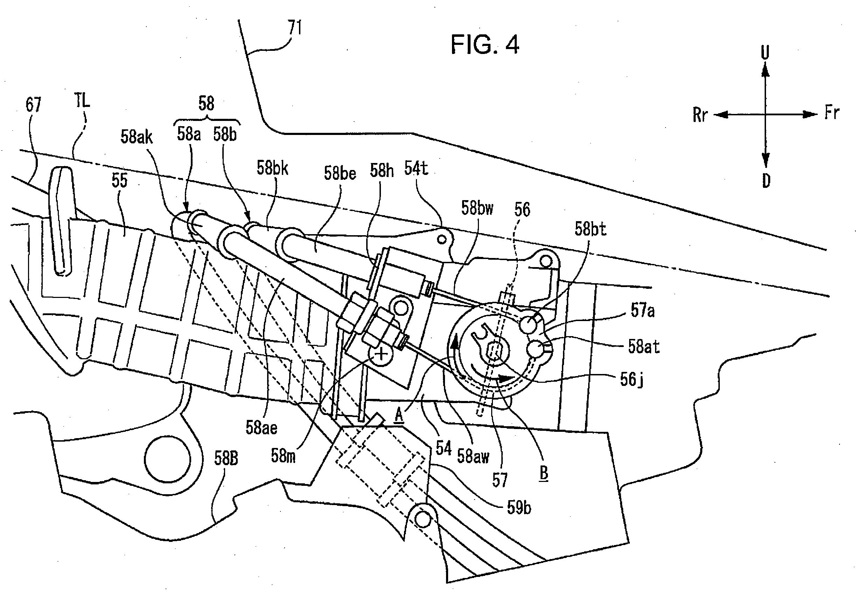

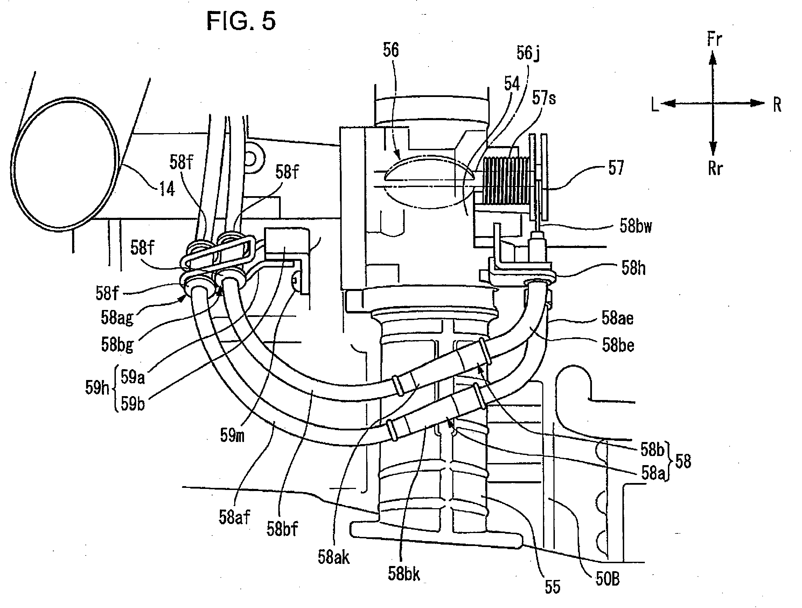

Further, as shown in FIGS. 3 and 4, the support shaft 56j supporting the throttle valve 56j is connected to a throttle drum 57 which is arranged on the right outer side (see FIG. 5) of the throttle body 54. This throttle drum 57 is formed in substantially a circular shape in a side view.

To an upper part and a lower part of the throttle drum 57 are connected cables. Namely, a throttle cable 58a on an opening side which rotates the throttle valve 56 toward the opening side thereof (in the direction of an arrow A) is connected to the lower part of the throttle drum 57, while a throttle cable 58b on the closing side which rotates the throttle valve 56 toward the closing side thereof (in the direction of an arrow B) is connected to the upper part of the throttle drum 57.

By the way, around the support shaft 56j, as shown in FIG. 5, there is provided a coil spring 57s which spring-biases the throttle drum 57 to the closing side (in a predetermined direction). Namely, the coil spring 57s arranged properly between the throttle drum 57 and the throttle body 54 is able to apply rotational force to the throttle drum 57 in the closing direction (in the direction of an arrow B).

Further, as shown in FIGS. 3 and 4, the throttle cable 58a on the opening side and the throttle cable 58b on the closing side are fixed in a drum side holder 58h located immediately behind the throttle drum 57 in the side view. This drum side holder 58h holds the throttle cable 58a on the opening side and the throttle cable 58b on the closing side in an upwardly and downwardly spaced apart condition in a side by side relationship.

Herein, as shown in FIG. 5, the throttle cable 58a on the opening side and the throttle cable 58b on the closing side include non-flexible curved pipe members 58ae and 58be (steel tubes in this embodiment) provided in distal ends of flexible outer tubes 58af and 58bf. The throttle cable 58a on the opening side and the throttle cable 58b on the closing side are held through the non-flexible curved pipe members 58ae, 58be by the drum side holder 58h. The outer tubes 58af, 58bf and the curved pipe members 58ae, 58be are connected by rubber members 58ak and 58bk located above the intake passage 55.

Moreover, as shown in FIG. 4, an inner cable wire 58aw of the throttle cable 58a on the opening side and an inner cable wire 58bw of the throttle cable 58b on the closing side are wrapped just in a predetermined degree around an outer circumference of the throttle drum 57. Each of distal ends 58at, 58bt of the inner cable wire 58aw and the inner cable wire 58bw are engaged in a wire retaining portion 57a. Accordingly, the throttle drum 57 is rotated in the A direction or in the B direction by a pulling movement of the inner cable wire 58a or by a returning movement of the inner cable wire 58bw so as to open and close the throttle valve 56. With respect to the operation of the throttle valve 56, the most curved portions of the cables are formed of the curved pipe members 58ae, 58be, so that the friction of each of the inner cable wires 48aw, 58bw can be reduced.

Further, the throttle cable 58a on the opening side and the throttle cable 58b on the closing side are arranged on and pass through an upper surface of the intake passage 55. Namely, these throttle cables 58a, 58b are spaced apart from each other in relation to a drum upper side and a drum lower side and connected to the throttle drum 57 which is located on the right side of the throttle body 54. The throttle cable connected to the drum upper side of the throttle drum 57 is located on the front side with respect to the vehicle body, and the throttle cable connected to the drum lower side is located on the rear side such that they are arranged side by side substantially in the horizontal direction.

Further, the throttle cable 58a on the opening side and the throttle cable 58b on the closing side are supported by the drum side holder 58h on the side where the throttle drum 57 is located, and by a counter drum side holder 59h located on the opposite side of the throttle drum 57, so as not to slip out of place.

Herein, the drum side holder 58h, as shown in FIGS. 4 and 5, is formed of a plate member of an L-shape in a horizontal cross section for example and fixed on the throttle body 54 by a fixing screw 58m, etc. In addition, the drum side holder 58h holds the throttle cable 58a on the opening side and the throttle cable 58b on the closing side by an upright portion thereof extending upwardly in the direction substantially orthogonal to the throttle body 54.

On the other hand, the counter drum side holder 59h, as shown in FIG. 5, is located on the opposite side of the drum side holder 58h, and a mounting base section 59b retaining a holder section 59a of a clip shape at a distal endpart thereof is fixed on the engine main body 50B by a fixing screw 59m, etc. In addition, the throttle cable 58a on the opening side and the throttle cable 58b on the closing side each of which runs from the drum side holder 58a are securely retained by the clip-shaped holder section 59a in a condition where they are arranged side by side in the obliquely upward direction (see FIGS. 4 and 5).

Further, on the throttle cable 58a on the opening side and the throttle cable 58b on the closing side there are provided holder guides 58ag, 58bg in a position retained by the holder section 59a. In addition, these holder guides 58ag, 58bg have flange portions 58f for receiving the holder section 59a, in front and in the rear in the longitudinal direction thereof. Accordingly, by fitting the holder section 59a in engagement with insides of the flange portions 58f, 58f, the throttle cable 58a on the opening side and the throttle cable 58b on the closing side are securely fixed so as not to slip out of place.

Like this, the throttle cable 58a on the opening side and the throttle cable 58b on the closing side which are fixed by the drum side holder 58h and the counter drum side holder 59h are arranged side by side in the forward and backward direction of the vehicle body substantially horizontally above the intake passage 55, as shown in FIGS. 4 and 5, and maintained in position. Moreover, the throttle cables 58 are connected to the right handle grip 19a (the left handle grip is illustrated in FIG. 1), and, when the rider rotates the handle grip 19a in operation, the throttle drum 57 is rotated whereby to allow the throttle valve 56 to be opened and closed.

Further, in the unit swing engine 50, an injector 59 is arranged on the forward side of the throttle body 54. Fuel is fed to the injector 59 for example through a fuel hose 72a. In this embodiment, the injector 59 forms an uppermost end 59t which is an uppermost position in the front part of the engine 50. In addition, a virtual straight line TL connecting the upper post end 59t and an uppermost portion 54t which is an uppermost end of the throttle body 54 forms a substantial uppermost line of the engine main body 50B. Accordingly, this straight line TL has an influence upon the position of a bottom surface 71b of the container box 71, and the throttle cable 58a on the opening side and the throttle cable 58b on the closing side in this embodiment are arranged in such a way as to be locatedbelow an extension of the straight line TL in the upward and downward direction of the vehicle body.

Like this, in this embodiment, the throttle cable 58a on the opening side and the throttle cable 58b on the closing side located above the intake passage 55 and below the container box 71 are arranged substantially horizontally side by side in the forward and backward direction of the vehicle body. With this arrangement, a space occupied by these throttle cables 58a, 58b in the upward and downward direction of the vehicle body can be restrained. As a result, the bottom of the container box 71 is allowed to approach the intake passage 55 side in proportion to decrease of the space occupied by these throttle cables 58a, 58b, so that the volume of the container box 71 can be increased.

Further, in this embodiment, the throttle cable 58a on the opening side and the throttle cable 58b on the closing side which are connected to the throttle drum 57 in such a way as to pass through the upper surface of the intake passage 55 are spaced apart from each other in the upward and downward direction in a side view. The cable connected to the upper side of the throttle drum 57 is arranged so as to be located on the front side with respect to the vehicle body, and the cable connected to the lower side of the throttle drum 57 is arranged so as to be located on the rear side with respect to the vehicle body. Therefore, the throttle cable 58a on the opening side and the throttle cable 58b on the closing side which are connected to the throttle drum 57 arranged in either of left and right sides of the throttle body 54 can be arranged on or close to the upper surface of the intake passage 55 without crossing, whereby to improve the arrangeability.

Further, in this embodiment, the throttle cable 58a on the opening side and the throttle cable 58b on the closing side are arranged and located below the extension of the straight line TL connecting the uppermost portion of the throttle body 54 and the uppermost end 59t of the injector 59. Thus, since these throttle cables 58a, 58b are located below the straight line TL which is the uppermost line of the engine main body 50B, they do not occupy an arrangement space for the container box 71 which is located above the engine 50, so that the influence upon the volume of the container box 71 can be decreased.

Furthermore, in this embodiment, since the throttle cable 58a on the opening side and the throttle cable 58b on the closing side are maintained in the arrangement position above the intake passage 55 by the drum side holder 58h on the side where the throttle drum 57 is located and by the counter drum side holder 59h located on the opposite side of the throttle drum 57. Namely, since these throttle cables 58a, 58b on the opening and closing sides are kept in such a good condition as to be arranged substantially horizontally even if a vibration is caused in the vehicle body, the space occupied by these throttle cables 58a, 58b in the upward and downward direction of the vehicle body is able to be restrained, so that the influence upon the volume of the container box 71 can be decreased all the more.

As above, while the present invention has been described in its preferred embodiment, it is to be understood that the present invention is not limited to the above described embodiment, and that various changes and modifications may be made without departing from the scope of the present invention.

For example, also in the construction in which the throttle drum 57 is arranged on the left side of the throttle body 54, when the throttle cable connected to the upper side of the throttle drum 57 is located forwardly of the vehicle body and the throttle cable connected to the lower side of the throttle drum 57 is located rearwardly of the vehicle body, both the throttle cables 58a, 58b can be arranged on or close to the upper surface of the intake passage 55 without crossing.

In addition, in this embodiment, the supporting structure of the throttle cables 58 is not limited to the above embodiment and may be properly changed.

### DESCRIPTION OF REFERENCE CHARACTERS

10: Scooter type vehicle (Straddle type vehicle), 11: Vehicle body frame,12: Down frame, 13: Lower frame, 14: Rear frame, 15: Head pipe, 20L: Link mechanism, 50: Unit swing engine, 50a: Cylinder section, 50B: Engine main body, 54: Throttle body, 54t: Uppermost portion of throttle body, 55: Intake passage, 56: Throttle valve, 57: Throttle drum, 58: Throttle cable, 58a:Throttle cable on the opening side, 58b: Throttle cable on the closing side, 58h: Drum side holder, 59: Injector, 59h: Counter drum side holder, 59t: Uppermost end of injector, 71: Container box, TL: Straight line

## Claims

1. A straddle type vehicle (10) with a wiring structure of a throttle cable (58) comprising:
a vehicle body frame (11);
a unit swing engine (50) being supported on the vehicle body frame (11) in a swingable fashion;
a container box (71) being arranged above the unit swing engine (50);
an intake passage (55) extending from a cylinder section (50a) of the unit swing engine (50) rearwardly along an engine main body (50B) in such a way as to pass through between the container box (71) and the engine main body (50B);
a throttle valve (56) being provided in the intake passage (55) so as to open and close the intake passage (55);
a throttle drum (57) for operating the throttle valve (56);
a first throttle cable (58a) being fitted to the throttle drum (57) so as to operate the throttle valve (56) toward the opening side; and
a second throttle cable (58b) being fitted to the throttle drum (57) so as to operate the throttle valve (56) toward the closing side, wherein
the first throttle cable (58a) and the second throttle cable (58b) leave the throttle drum (57) in an upwardly and downwardly spaced apart condition in a side view;
**characterized in that**
the first throttle cable (58a) and the second throttle cable (58b) are arranged side by side in the forward and backward direction of the vehicle and traverse substantially horizontally above the intake passage (55); and
on an upper surface of the intake passage (55), the second throttle cable (58b) leaving the throttle drum (57) on an upper side of the throttle drum (57) is arranged forwardly with respect to the first throttle cable (58a) leaving the throttle drum (57) on a lower side of the throttle drum (57).

2. A straddle type vehicle (10) according to claim 1, wherein
the first throttle cable (58a) and the second throttle cable (58b) are arranged below an extension of a straight line (TL) connecting an upper most portion (54t) of a throttle body (54) and an uppermost end of an injector (59).

3. A a straddle type vehicle (10) according to claim 1 or 2, wherein
the first throttle cable (58a) and the second throttle cable (58b) are kept in an arrangement position above the intake passage (55) by a drum side holder (58h) on the side where the throttle drum (57) is provided and by a counter drum side holder (59h) provided on the opposite side of the throttle drum (57).

## Patentansprüche

1. Fahrzeug vom Grätschsitztyp (10) mit einer Kabelanordnung eines Gasgriffkabels (58), aufweisend:
einen Fahrzeugkarosserierahmen (11);
eine schwenkbare Motoreinheit (50), die von dem Fahrzeugkarosserierahmen (11) in einer schwenkbaren Weise gehalten wird;
einer Aufbewahrungsbehälter (71), die über der schwenkbaren Motoreinheit (50) angeordnet ist;
einen Einlasskanal (55), der sich von einem Zylinderabschnitt (50a) der schwenkbaren Motoreinheit (50) nach hinten entlang eines Hauptmotorkörpers (50b) so erstreckt, dass er zwischen dem Aufbewahrungsbehälter (71) und dem Hauptmotorkörper (50b);
ein Drosselventil (56), das in dem Einlasskanal (55) angeordnet ist, um den Einlasskanal (55) zu öffnen und zu schließen;
eine Drosselklappentrommel (57) zum Betätigen des Drosselventils (56);
ein erstes Gasgriffkabel (58a), das an der Drosselklappentrommel (57) angebracht ist, um das Drosselventil (56) auf die geschlossene Seite zu zu betätigen;
ein zweites Gasgriffkabel (58b), das an der Drosselklappentrommel (57) angebracht ist, um das Drosselventil (56) auf die schließende Seite zu zu betätigen, wobei
das erste Gasgriffkabel (58a) und das zweite Gasgriffkabel (58b) die Drosselklappentrommel (57) in einer Seitenansicht in einem nach oben und nach unten beabstandeten Zustand verlassen;
**dadurch gekennzeichnet, dass**
das erste Gasgriffkabel (58a) und das zweite Gasgriffkabel (58b) Seite an Seite in einer Vorne-Hintenrichtung des Fahrzeugs angeordnet sind und über dem Einlasskanal (55) im Wesentlichen horizontal queren; und
das zweite Gasgriffkabel (58b) an einer oberen Fläche des Einlasskanals (55) in Bezug auf das erste Gasgriffkabel (58a), das die Drosselklappentrommel (57) an einer unteren Seite der Drosselklappentrommel (57) verlässt, vorderhalb angeordnet ist.

2. Fahrzeug vom Grätschsitztyp (10) gemäß Anspruch 1, wobei
das erste Gasgriffkabel (58a) und das zweite Gasgriffkabel (58b) unter einer Verlängerung einer geraden Linie (TL), die einen obersten Bereich (54t) des Drosselklappenkörpers (54) und einem obersten Ende eines Einspritzventils (59) verbindet angeordnet sind.

3. Fahrzeug vom Grätschsitztyp (10) gemäß Anspruch 1 oder 2, wobei
das erste Gasgriffkabel (58a) und das zweite Gasgriffkabel (58b) in einer Anordnungsposition oberhalb des Einlasskanals (55) durch einen Drommelseitenhalter (58h) auf der Seite gehalten werden, wo die Drosselklappentrommel (57) vorgesehen ist und durch einen entgegengesetzten Drommelseitenhalter (59h), der an der gegenüberliegenden Seite der Drosselklappentrommel (57) vorgesehen ist.

## Revendications

1. Véhicule de type à selle (10) avec une structure de câblage d'un câble de commande des gaz (58) comprenant :
une ossature de véhicule (11) ;
un moteur d'oscillation d'unité (50) qui est supporté sur l'ossature de véhicule (11) d'une manière oscillante ;
une boîte de contenant (71) qui est agencée au-dessus du moteur d'oscillation d'unité (50) ;
un passage d'admission (55) s'étendant à partir d'une section de cylindre (50a) du moteur d'oscillation d'unité (50) vers l'arrière le long du corps principal de moteur (50B) afin de traverser entre la boîte de contenant (71) et le corps principal de moteur (50B) ;
une soupape de commande des gaz (56) étant prévue dans le passage d'admission (55) afin d'ouvrir et de fermer le passage d'admission (55) ;
un tambour de commande des gaz (57) pour actionner la soupape de commande des gaz (56) ;
un premier câble de commande des gaz (58a) qui est monté sur le tambour de commande des gaz (57) afin d'actionner la soupape de commande des gaz (56) vers le côté d'ouverture ; et
un second câble de commande des gaz (58b) qui est monté sur le tambour de commande des gaz (57) afin d'actionner la soupape de commande des gaz (56) vers le côté de fermeture, dans lequel :
le premier câble de commande des gaz (58a) et le second câble de commande des gaz (58b) quittent le tambour de commande des gaz (57) dans une condition espacée vers le haut et vers le bas sur une vue latérale ;
**caractérisé en ce que** :
le premier câble de commande des gaz (58a) et le second câble de commande des gaz (58b) sont agencés côte à côte dans la direction vers l'avant et vers l'arrière du véhicule et traversent sensiblement horizontalement au-dessus du passage d'admission (55) ; et
sur une surface supérieure du passage d'admission (55), le second câble de commande des gaz (58b) quittant le tambour de commande des gaz (57) sur un côté supérieur du tambour de commande des gaz (57) est agencé vers l'avant par rapport au premier câble de commande des gaz (58a) quittant le tambour de commande des gaz (57) sur un côté inférieur du tambour de commande des gaz (57).

2. Véhicule de type à selle (10) selon la revendication 1, dans lequel :
le premier câble de commande des gaz (58a) et le second câble de commande des gaz (58b) sont agencés au-dessous d'une extension d'une ligne droite (TL) raccordant la partie la plus haute (54t) d'un corps de commande des gaz (54) et l'extrémité la plus haute d'un injecteur (59).

3. Véhicule de type à selle (10) selon la revendication 1 ou 2, dans lequel :
le premier câble de commande des gaz (58a) et le second câble de commande des gaz (58b) sont maintenus dans une position d'agencement au-dessus du passage d'admission (55) par un support latéral de tambour (58h) sur le côté où le tambour de commande des gaz (57) est prévu et par un support latéral de contre-tambour (59h) prévu sur le côté opposé du tambour de commande des gaz (57).
